# NEUE EUROPÄISCHE PATENTSCHRIFT

(11) **EP 0 448 915 B2**
(45) Veröffentlichungstag und Bekanntmachung des Hinweises auf die Entscheidung über den Einspruch: **15.10.1997**
(45) Hinweis auf die Patenterteilung: 09.06.1993
(21) Anmeldenummer: 90811029.9
(22) Anmeldetag: 27.12.1990
(51) Int. Cl.: E04D 12/00, F16B 35/04

(54) **Verfahren zur Herstellung eines Unterdachs, Unterdach, hergestellt nach dem Verfahren und Verwendung einer Schraube zur Durchführung des Verfahrens**
Construction method for an under-roof, under-roof built according to this method, and use of a screw for the execution of the method
Procédé de construction d'une sous-toiture, sous-toiture construite selon ce procédé et utilisation d'une vis pour l'exécution du procédé

(30) Priorität: 28.03.1990 CH 1028/90
(43) Veröffentlichungstag der Anmeldung: 02.10.1991
(73) Patentinhaber: SFS Handels Holding AG, CH-9435 Heerbrugg (CH)
(72) Erfinder: Kunz, August, 8887 Mels (CH)
(74) Vertreter: Riederer, Conrad A., Dr.

(56) Entgegenhaltungen:
- DE-A- 2 944 241
- DE-C- 3 515 419
- FR-A- 813 643
- FR-A- 2 542 787
- FR-A- 2 571 764
- FR-A- 2 602 810
- US-A- 2 292 557
- Prospekt "Toproc Montagetechnik"
- Prospekt "Montagesystem Toproc"
- Prospekt Toproc "Nummer 1 der modernen Montagetechnik"

## Beschreibung

Die Erfindung betrifft ein Verfahren zur Herstellung eines Unterdachs mit einer zwischen Sparren und Konterlattung angeordneten Isolierschicht, wobei die Konterlattung mit den Sparren durch Distanzstücke verbunden wird.

Bei einer bekannten Konstruktion eines Unterdachs, welche in Figur dargestellt ist, befindet sich auf den Sparren 11 die Dachschalung 13. Ueber der Dachschalung 13 ist eine Dampfsperre und Luftdichtung 15 angeordnet. Es folgt eine Isolierschicht 17 mit einer Bitumenbahn 19. Die Konterlattung 21 ist mit Schrauben 23' befestigt, welche die Konterlattung durch die Schichten 19, 17, 15, 13 hindurch mit den Sparren 11 verbinden. Mit den Bezugsziffern 25 ist die Lattung bezeichnet, auf welcher beispielsweise ein Ziegeldach 27 angeordnet ist.

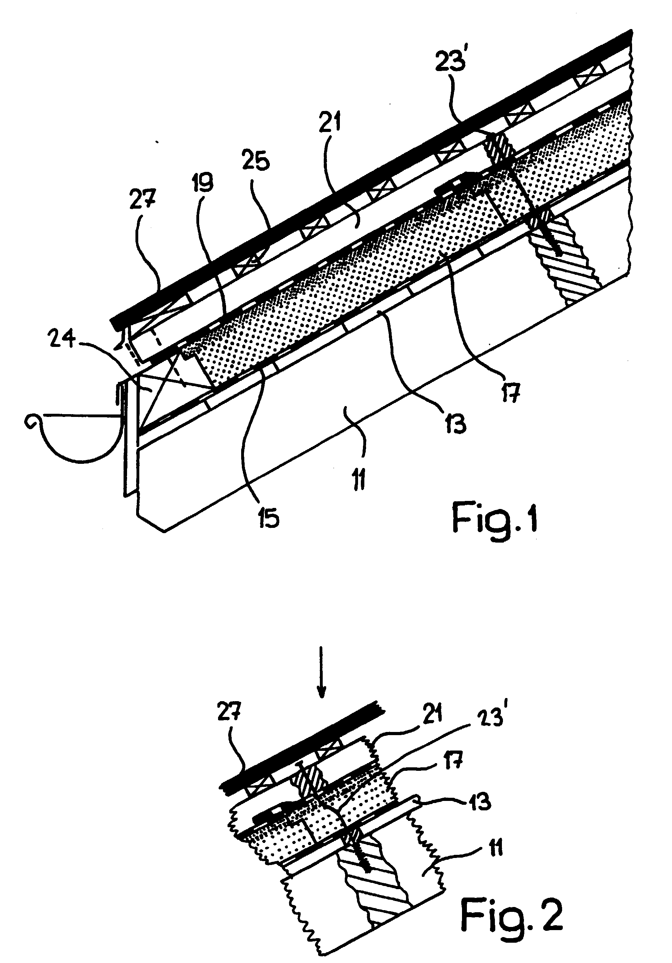

Die beschriebene Dachkonstruktion hat den Nachteil, dass bei hohen Schneelasten die Isolationsschicht 13 stark komprimiert wird. Dabei wirken auch Kräfte, welche bestrebt sind, die Dachkonstruktion in Richtung der Dachneigung zu bewegen. Es kann dann zu einer Situation kommen, wie sie in Figur 2 dargestellt ist Die Konterlattung rutscht am Schraubenschaft nach unten und die auf die Schrauben wirkenden Kräfte bewirken eine dauernde Verformung derselben. Die so beschädigte Dachkonstruktion büsst erheblich an Isolierwirkung ein. In schlimmen Fällen kann sogar das Dach undicht werden.

Im Gegensatz zu der oben beschriebenen Dachkonstruktion, die eine relativ weiche Isolationsschicht, z.B. Mineralfaserplatten, aufweist, verlangt die FR-A-2 602 810 ausdrücklich ein Bauelement mit einem Iolierkern aus starrem Schaumkunststoff. Im Schaumkunststoff sind zwei Latten eingelassen. Zur Isolation des Dachs werden die Bauelemente so ausgelegt, dass die Latten in waagrechter Richtung verlaufen. Darüber befindet sich zusätzlich eine Konterlattung, welche in Richtung der Dachschräge verläuft Die Befestigung der Bauelemente auf den Sparren erfolgt durch Spezialnägel, welche durch die Latten und den starren Isolierkern hindurch ungefähr senkrecht in die Sparren eingetrieben sind. Die Zeichnung zeigt bei einigen Nägeln leichte Abweichungen von der senkrechten Richtung, wie sie üblicherweise beim Eintreiben von Nägeln auftreten. Wie in der DE-A-35 15 419 richtig festgestellt wird, hat eine solche Dachkonstruktion der Nachteil, dass nur Nägel bis zu einer gewissen Grösse verwendbar sind. Dadurch wird die Dicke des Isolierkerns begrenzt, und zwar erfahrungsgemäss auf etwa 6 cm. Eine solche Dicke der Isolationsschicht vermag aber den heutigen Ansprüchen an die Wärmedämmung nicht zu genügen. Dazu kommt, dass die Wärmedämmung eines starren Isolierkerns aus Schaumkunststoff, wie er ausdrücklich gefordert wird, wesentlich geringer ist als bei einem relativ kompressiblen Wärmedämmatedal, wie z.B. Mineralwolle. Darüber hinaus wird die Isolationswirkung durch die Notwendigkeit von waagrechten Nuten zur Aufnahme von Latten beeinträchtigt. Die zitierte Entgegenhaltung gibt somit keine Lösung der in Verbindung mit den Figuren 1 und 2 beschriebenen Problemen der Dachisolation mit relativ dicken hochisolierenden aber relativ kompressiblen Isoliermaterialien. Die Fachwelt hat denn auch nach entsprechenden Lösungen gesucht. So setzt sich die FR-A-25 42 787 die Aufgabe, das Zusammendrücken der Isolation zu vermeiden. Zu diesem Zweck schlägt sie einen U-förmigen Abstandhaltervor, dessen Schenkel nach unten gerichtet sind und Spitzen zur Verankerung im Sparren aufweisen. Der die Schenkel verbindende Teil besitzt eine Oeffnung zur Befestigung des Abstandhalters mit einem Nagel. Bei der Montage des Abstandhalters dringen die Seitenwände durch die Isolationsschicht hindurch, und die Spitzen an den Schenkelenden graben sich in den Sparren ein. Von dem die Schenkel verbindenden Teil ragt eine Spitze nach oben und dient der Befestigung der Konterlatte. Nachteilig sind dabei die Beschädigung der Isolation durch das Eindringen der Schenkel und die durch die Schenkel geschaffenen Kältebrücken. Die Abstandhalter sind auch teuer in der Herstellung. Die nach oben ragende Spitze bildet vor dem Anbringen der Konterlatte auch eine Unfallgefahr.

Im Prospekt der BT System AG, CH-7554 Sent, wird ein "IsoFlx" genanntes Dachisolationssystem beschrieben, bei welchem die Dachisdation mit einem Bohrer durchbohrt wird, worauf dann ein in die Bohrung passendes Distanzstück eingesetzt und mit Nägeln oder Schrauben befestigt wird. Auf solche in Abständen voneinander angeordneten Distanzstücken kann dann die Konterlatte aufgesetzt werden. Nachteilig ist dabei insbesondere der Zeitaufwand zum Ausbohren der Dachisdation und das Einsetzen und Befestigen der Distanzstücke.

Die bereits genannte DE-A-35 15 419 beschreibt einen Abstandhalter, der aus einer Grundplatte, einem nach oben ragenden Steg und einer Platte zur Aufnahme einer Latte besteht. Im wesentlichen besteht der Abstandhalter aus zwei übereinander angeordneten und miteinander verbundenen L-förmigen Teilen. Die Grundplatte weist Löcher zum Befestigen am Sparren auf. Diese Abstandhalter können nur zwischen den Isolierplatten angeordnet werden. Dadurch wird der Anwendungsbereich der Abstandhalter stark eingeschränkt. Nachteilig ist auch, dass die über der Grundplatte angeordnete Platte zur Aufnahme einer Latte das Einschlagen von Nägeln zur Befestigung stark behindert Bei der Befestigung der Latte mit Nägeln auf der oberen Platte besteht ferner die Gefahr der Beschädigung der Isolation und das Verbiegen des Steges durch Hammerschläge. Schliesslich stellt auch der Abstandhalter eine massive Kältebrücke dar, wobei der grosse Flächenkontakt der Grundplatte mit dem Sparren den Wärmeverlust noch fördert.

Durch die US-B-2 292 557 ist eine Holzschraube bekanntgeworden, welche vorn ein Gewinde mit relativ grosser Steigung und hinten ein Gewinde mit relativ geringer Steigung aufweist. Kurz nach dem Schraubenkopf befindet sich eine Sollbruchstelle. Die Schraube dient beispielsweise dazu, das Quietschen eines Fussbodens zu eliminieren. Zu diesem Zweck wird eine Vorbohrung erstellt, die sich durch den oberen Boden hindurch in den unteren Boden erstreckt. Beim Einschrauben der Schraube bewirkt die Schraube wegen der unterschiedlichen Gewindesteigungen ein Niederziehen des oberen Bodens gegen den unteren Boden. Wenn diese fest aneinander anliegen, bewirkt die weitere Drehung des Schraubenziehers das Abbrechen des Schraubenkopfs an der Sollbruchstelle. Der Schraubenkopf kann dann entfernt und das Loch über der Schraube mit einem Füllmaterial ausgefüllt werden. Eine ähnliche Schraube mit Gewinden verschiedener Steigungen wird auch in der FR-A-813 643 beschrieben. In beiden Fällen dient die Schraube dazu, die Gegeneinanderbewegung von zwei Teilen zu bewirken. Es findet sich keine Anregung, die Schrauben dazu zu benützen, eine unerwünschte Gegeneinanderbewegung von zwei Teilen zu verhindern.

Es ist Aufgabe der vorliegenden Erfindung, ein Verfahren zur Herstellung eines Unterdachs zu schaffen, mit welchem die vorgehend beschriebenen Nachteile bekannter Unterdachkonstruktionen vermieden werden.

Gemäss der Erfindung wird das Verfahren der eingangs erwähnten Gattung dahingehend modifiziert, dass als Träger Schrauben verwendet werden, welche auch im hinteren Teil des Schraubenschafts einen Gewindeabschnitt aufweisen, um nach dem Eintreiben der Schraube als Sicherungsmittel zu wirken, welche verhindern, dass die Konterlattung am Schraubenschaft hinuntergleitet, und dass zur Verbindung der Konterlattung mit den Sparren die Schrauben den jeweiligen Sparren entlang in einer praktisch senkrechten Ebene in einem ersten bzw. einem zweiten Winkel zum Sparren angeordnet werden. Dadurch wird erreicht, dass die Schrauben, die durch hohe Schneelasten erzeugten Kräfte auf die Sparren übertragen. Auf diese Weise wird ein Zusammendrücken der Isolationsschicht durch die Schneelast verhindert. Es hat sich als zweckmässig erwiesen, die einen Schrauben lotrecht und die anderen Schrauben etwa in einem Winkel von neunzig Grad zum Sparren einzutreiben. In diesem Fall entspricht der Unterschied zwischen beiden Winkeln dem Neigungswinkel des Daches. Es erweist sich aber als vorteilhaft, den Unterschied der beiden Winkel etwa im Bereich von dreissig bis neunzig Grad zu halten. Wie später noch näher erläutert wird, wird auf diese Weise eine starre Verstrebung zwischen Konterlattung und Sparren erreicht.

Zweckmässigerweise wird die Konterlattung vor dem Eintreiben einer Schraube derart vorgebohrt, dass ein Gewindeabschnitt im hinteren Teil des Schraubenschafts als Sicherungsmittel zur Verankerung der Schraube in der Konterlattung wirkt. Hat dieses Gewinde beispielsweise einen Durchmesser von 9 mm, so kann die Vorbohrung mit einem Bohrer mit 6 mm Durchmesser erfolgen. Es entsteht dann eine Vorbohrung, in welcher beim Eintreiben der Schraube diese mit dem hinteren Gewindeabschnitt sicher in der Konterlattung verankert wird. Mit besonderem Vorteil wird eine Schraube benützt, deren Gewindeabschnitt im hinteren Teil des Schraubenschafts eine kleinere Steigung aufweist als der Gewindeabschnitt im vorderen Teil des Schraubenschafts. Dies hat dann zur Folge, dass beim Eintreiben der Schraube die Isolierschicht leicht komprimiert wird und dadurch eine Zugspannung auf die Schraube ausübt. Bei einer mittleren Schneelast auf dem Dach wird die Zugspannung auf die'Schrauben kompensiert. Erst bei einer grossen Schneelast wird dann die Schraube auf Druck beansprucht.

Die Erfindung betrifft auch ein nach dem erfindungsgemässen Verfahren hergestelltes Unterdach mit einer zwischen Sparren und Konterlattung angeordneten Isolierschicht, wobei die Konterlattung mittels Schrauben mit den Sparren verbunden ist, welche auch im hinteren Teil des Schraubenschafts einen Gewindeabschnitt aufweisen, welcher als Sicherungsmittel wirkt, die verhindern, dass die Konterlattung am Schraubenschaft hinuntergleitet. Auf die Vorteile dieser Konstruktion ist bereits bei der Beschreibung des Verfahrens hingewiesen worden. Entsprechendes gilt auch für die Ausführungsbeispiele, die in den Ansprüchen 7 bis 10 beschrieben werden.

Schliesslich betrifft die Erfindung auch die Verwendung einer Schraube zur Durchführung des Verfahrens mit einem Gewindeabschnitt im hinteren und im vorderen Teil des Schraubenschafts. Diese Schraube ist dadurch gekennzeichnet, dass der vordere Teil der Schraube als Bohrer ausgebildet ist. Dies ermöglicht es, die Schraube mit geringem Kraftaufwand in den Sparren einzuschrauben. Die Bohrerspitze kann statt des vorderen Gewindeabschnitts vorgesehen sein. Eine Ausführungsform der Schraube sieht vor, dass der Gewindeabschnitt im hinteren Teil des Schraubenschafts einen Durchmesser von etwa 9 mm und der Gewindeabschnitt im vorderen Teil des Schraubenschafts einen Durchmesser von etwa 7 mm aufweist. Dies hat den Vorteil, dass die Schraube leicht durch eine Vorbohrung in der Konterlatte gestossen werden kann, wobei dann beim Eindrehen der Schraube in den Sparren der Gewindeabschnitt im hinteren Teil des Schraubenschafts gut in der Konterlattung verankert wird.

Eine weitere Ausführungsform sieht vor, dass der Gewindeabschnitt im hinteren Teil des Schraubenschafts eine kleinere Steigung aufweist, z.B. 2,5 mm, als die Steigung des Gewindeabschnitts im vorderen Teil des Schraubenschafts, wo die Steigung etwa 3,5 mm beträgt. Dies bringt den Vorteil, dass die Schraube nach dem Eindrehen auf Zug beansprucht wird und bei hohen Schneelasten die Druckbeanspruchung der Schraube in sicheren Grenzen gehalten wird.

Die Zeichnung zeigt
- Figur 1: Eine schematische Darstellung einer bekannten Dachkonstruktion,
- Figur 2: das Verhalten der bekannten Dachkonstruktion bei einer hohen Schneelast,
- Figur 3: ein Ausführungsbeispiel der erfindungsgemässen Dachkonstruktion,
- Figur 4: eine schematische Darstellung der Verbindung von Konterlattung und Sparren,
- Figur 5: eine Schraube, wie sie zur Herstellung der Verbindung zwischen Konterlattung und Sparren verwendet wird,
- Figur 5a: eine Schraube wie in Figur 5, bei welcher aber der vordere Teil als Bohrer ausgebildet ist,
- Figur 6: eine Versuchsanordnung, welche zum Test der erfindungsgemässen Dachkonstruktion benutzt wurde,
- Figur 7: einen Frontalschnitt durch die Versuchsanordnung von Figur 6, und
- Figur 8: ein Diagramm, welche das mit der Versuchsanordnung von Figuren 6 und 7 ermittelte Schubverhalten der erfindungsgemässen Dachkonstruktion im Vergleich zu einer ebenfalls Schrauben verwendenden bekannten Dachkonstruktion darstellt.

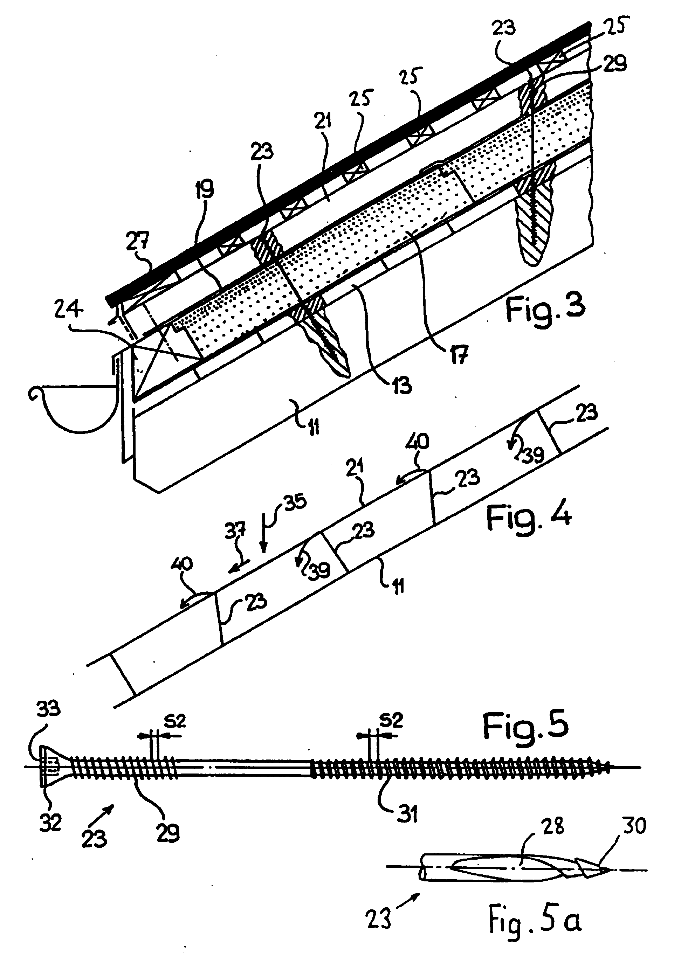

Bei dem in Figur 3 dargestellten Ausführungsbeispiel der erfindungsgemässen Dachkonstruktion befindet sich auf den Sparren 11 die Dachschalung 13. Ueber der Dachschalung 13 ist eine Dampfsperre und Luftdichtung 15 angeordnet. Es folgt eine Isolierschicht 17 mit einer Bitumenbahn 19. Darüber befindet sich die Konterlattung 21. Mit der Bezugsziffer 24 ist eine Anschlaglatte bezeichnet. Die Bezugsziffer 25 bezieht sich auf die Lattung, auf welcher beispielsweise ein Ziegeldach 27 angeordnet ist. Von Bedeutung ist nun, dass die Konterlattung 21 mittels Schrauben 23 derart mit den Sparren 11 verbunden ist, dass im Bereich der Konterlattung befindliche Sicherungsmittel 29 eine Relativbewegung zwischen Konterlattung 21 und Schrauben 23 praktisch verhindern.

Ein erstes Ausführungsbeispiel der Schraube 23 ist in Figur 5 dargestellt. Die Schraube 23 kann in verschiedenen Längen gefertigt werden. Zweckmässig sind Längen von 230, 250, 270 und 300 mm. Der Gewindeabschnitt 29 im hinteren Teil des Schraubenschafts hat einen grösseren Durchmesser, z.B. 9 mm, als der Gewindeabschnitt 31 im vorderen Teil des Schraubenschafts. Der dortige Durchmesser beträgt etwa 7 mm. Dies ermöglicht es, die Schraube 23 leicht in eine Vorbohrung in der Konterlattung 21 einzuführen, worauf sie dann in den Sparrren 11 eingedreht werden kann. Zum Eindrehen besitzt die Schraube 23 einen Schraubenkopf 32 mit einem Innensechskant 33, einem Sechskant, Vierkant oder einem anderen geeigneten Mittel zu diesem Zweck. Beim Eindrehen der Schraube schrauben sich die Gewindegänge des Gewindeabschnitts 31 in den Dachsparren 11 und die Gewindegänge des Gewindeabschnitts 29 in das Holz der Konterlattung 21 ein. Der Gewindeabschnitt 29 wirkt somit als Sicherungsmittel, welcher eine Relativbewegung zwischen Konterlattung 21 und Schraube 23, wie sie in Figur 2 dargestellt wird, verhindert.

Die Steigung S2 des Gewindeabschnitts 29 ist kleiner als die Steigung des Gewindeabschnitts 31. Beim gezeigten Ausführungsbeispiel beträgt die Steigung S1 3,5 mm, währenddem die Steigung S2 bloss 2,5 mm beträgt. Beim Eintreiben der Schraube dringt somit der Gewindeabschnitt 31 schneller in den Sparren 11 ein als der Gewindeabschnitt 29 in die Konterlattung 21. Dies hat zur Folge, dass der Abstand zwischen Sparren und Konterlattung etwas verkleinert wird. Dadurch wird die Isolierschicht 17 etwas komprimiert und übt eine Zugkraft auf die Schraube 23 aus.

Ein zweites Ausführungsbeispiel der Schraube 23 gemäss Fig. 5a unterscheidet sich von jenem von Fig. 5 dadurch, dass statt des vorderen Gewindeabschnitts eine Bohrerspitze 30 vorgesehen ist. Im übrigen ist die Schraube grundsätzlich gleich ausgebildet wie in Fig. 5. Die Schraube von Fig. 5a lässt sich besonders gut einschrauben. Beim Einschrauben bildet die Bohrerspitze 30 Holzspäne, die durch den Spankanal 28 aus dem Sparren nach aussen gefördert werden.

Wie Figur 3 zeigt, ist eine Schraube 23 lotrecht angeordnet. Die andere Schraube 23 ist etwa in einem Winkel von neunzig Grad zum Sparren 11 angeordnet. Diese Anordnung wird auch schematisch in Figur 4 dargestellt. Es hat sich als zweckmässig erwiesen, die Schrauben 23 in einer praktisch senkrechten Ebene abwechselnd in einem ersten, bzw. einem zweiten Winkel zum Sparren anzuordnen, wobei der Unterschied zwischen beiden Winkeln etwa dreissig bis neunzig Grad betragen sollte. Erzeugt nun eine Schneelast eine Kraft in Richtung des Pfeils 35, so entsteht eine Kraftkomponente in Richtung des Pfeils 37, also in Richtung der Dachschräge. Diese Komponente 37 ist nun bestrebt, die einen Schrauben 23 in Richtung der Pfeile 39 zu bewegen. Die gleiche Kraftkomponente 37 ist aber auch bestrebt, die anderen Schrauben 23 in Richtung der Pfeile 40 zu bewegen. Eine Bewegung in Richtung der Pfeile 40 würde jedoch ein Anheben des Daches erfordern, was natürlich nicht möglich ist, weil die Kraft 35 grösser ist als die Kraftkomponente 37. Zusammenfassend kann somit festgestellt werden, dass eine starre Verbindung zwischen Konterlattung 21 und Sparren 11 erreicht wird. Die beschriebene Dachkonstruktion ist sehr stabil und vermeidet sicher die Nachteile der in bezug auf die Figuren 1 und 2 beschriebenen Dachkonstruktion.

### Versuche

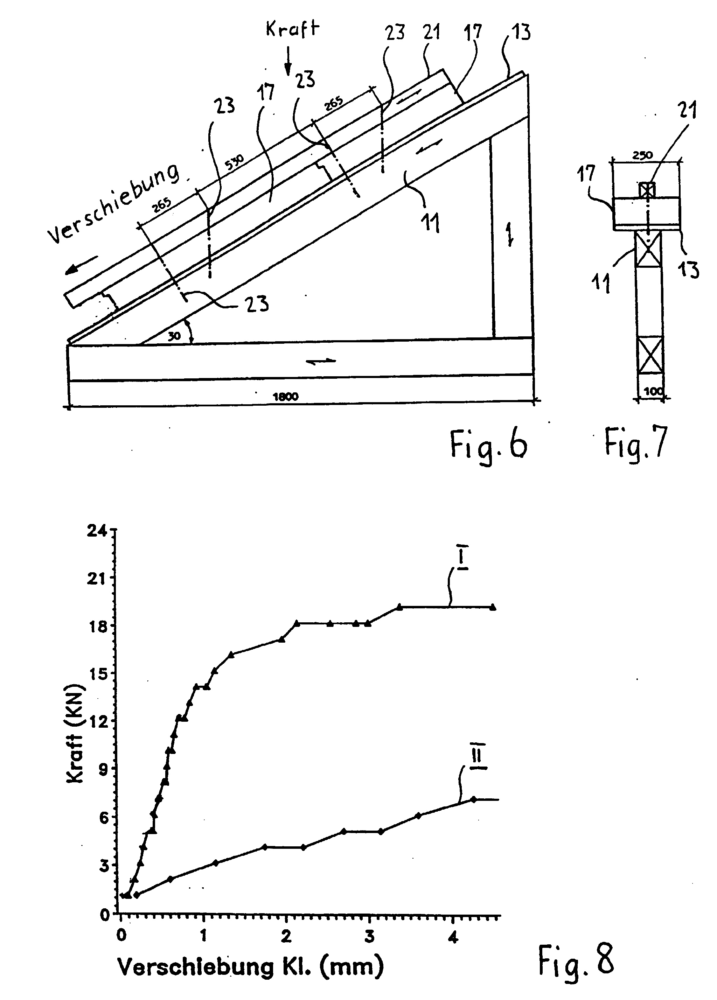

Nachfolgend werden von der EMPA Eidgenössische Materialprüfungs- und Forschungsanstalt durchgeführte Versuche I und II beschrieben. Diese Versuche erfolgten gemäss dem in den Figuren 6 und 7 gezeigten Versuchsaufbau, bei dem die Anschlaglatte 24 (Figuren 3 und 1) weggelassen wurde. Die Bezugszeichen sind die gleichen wie in Figur 3, so dass diesbezüglich auf die vorangehende Beschreibung verwiesen werden kann.

Die vertikale Kraft wurde mit einem über der Längsmitte des Sparrens 11 angeordneten hydraulischen Zylinder auf die Dachfläche übertragen, wobei zur Krafteinleitung ein auf der Konterlatte 21 aufgelegtes biegesteifes Kantholz (nicht eingezeichnet) verwendet wurde.

Gemessen wurden mit einer Ablesegenauigkeit von 0,01 mm die Verschiebungen der Konterlatte 21 gegenüber dem untenliegenden Sparren 11 und die Eindrückung (Krümmung) der Konterlatte 21 in die Isolierschicht 17 in der Mitte zwischen einem Schraubenpaar 23 (Fig. 3) bzw. 23' (Fig. 1 und 2).

### Versuch I (Erfindungsgemässe Dachkonstruktion)

Für diesen Versuch wurden spezielle Holzschrauben verwendet, die sich wie folgt charakterisieren lassen:

### Sechskant-Spezialholzschraube mit zwei Gewindeabschnitten

| | | |
|---|---|---|
| Schraubenlänge | | 270 mm |
| Schaftdurchmesser | | 7 mm |
| Gewinde | | |
| oberer Teil: | Länge | 80 mm |
| | Aussendurchmesser | 8,7 mm |
| | Kerndurchmesser | 5,7 mm |
| unterer Teil: | Länge | 80 mm |
| | Aussendurchmesser | 7 mm |
| Gewinde nach DIN 7996 | | |

Der Gewindesteigungsunterschied auf 80 mm Gewindelänge zwischen dem hinteren und vorderen Gewindeabschnitt betrug 3 mm.

Die Vorbohrungen bei der Konterlatte 21 hatte einen Durchmesser von 6 mm.

### Versuch II (Bekannte Dachkonstruktion entsprechend Figuren 1 und 2)

Für diesen Versuch wurden Sechskant-Holzschrauben SW 13 senkrecht zur Dachfläche angeordnet.

| | |
|---|---|
| Schraubenlänge | 270 mm |
| Gewindelänge | 130 mm |
| Schaftdurchmesser | 8 mm |
| Dünnschaftdurchmesser | 6,85 mm |

### Ergebnisse

Wie ein Vergleich der Kurven zeigt, besitzt die erfindungsgemässe Dachkonstruktion (Kurve I) ein wesentlich besseres mechanisches Verhalten als die bekannte Dachkonstruktion (Kurve II). Bei der erfindungsgemässen Dachkonstruktion (Kurve I) ist die Verschiebung der Konterlatte 21 bei den in der Praxis auftretenden Belastungen vernachlässigbar gering. Es wurde auch festgestellt, dass die Konterlatte 21 sogar bei sehr hoher Belastung praktisch nicht in die Isolierschicht eingedrückt wurde.

Bei der bekannten Dachkonstruktion (Kurve II) war dies jedoch schon bei relativ geringen Belastunge der Fall, weil dann die in bezug auf Fig. 2 geschilderte Situation entstand.

Zusammenfassend kann folgendes festgehalten werden: Die Schraube 23 weist einen Gewindeabschnitt 29 auf, der einen grösseren Durchmesser aufweist als der Gewindeabschnitt 31. Die Schrauben 23 werde abwechslungsweise in einem ersten und einem zweiten Winkel in den Sparren 11 eingeschraubt. Da die Schrauben 23 mit dem Gewindeabschnitt 29 fest in der Konterlattung 21 verankert sind, kann auch bei hohem Schneedruck die Konterlattung 21 nicht am Schraubenschaft hinuntergleiten und die Isolationsschicht 17 zusammendrücken. Dank der festen Verankerung der Schrauben 23 in der Konterlattung 21 entsteht eine starre Verstrebung zwischen Konterlattung 21 und Sparren 11, welcher auch hoher Schneedruck (Pfeil 35) nichts anhaben kann.

## Patentansprüche

1. Verfahren zur Herstellung eines Unterdachs mit einer zwischen Sparren (11) und Konterlattung (21) angeordneten Isolierschicht (17), wobei die Konterlattung (21) mit den Sparren (11) durch Träger verbunden wird, dadurch gekennzeichnet, dass als Träger Schrauben (23) verwendet werden, welche auch im hinteren Teil des Schraubenschafts einen Gewindeabschnitt (29) aufweisen, um nach dem Eintreiben der Schraube als Slcherungsmittel zu wirken, welche verhindern, dass die Konterlattung (21) am Schraubenschaft hinuntergleitet, und dass zur Verbindung der Konterlattung (21) mit den Sparren (11) die Schrauben (23) den jeweiligen Sparren entlang in einer praktisch senkrechten Ebene in einem ersten bzw. einem zweiten Winkel zum Sparren angeordnet werden.

2. Verfahren nach Anspruch 1, dadurch gekennzeichnet, dass die einen Schrauben (23) lotrecht und die anderen Schrauben (23) etwa in einem Winkel von neunzig Grad zum Sparren (11) angeordnet werden.

3. Verfahren nach Anspruch 1 oder 2, dadurch gekennzeichnet, dass der Unterschied zwischen beiden Winkeln etwa dreissig bis neunzig Grad beträgt.

4. Verfahren nach einem der Ansprüche 1 bis 3, dadurch gekennzeichnet, dass die Konterlattung (21) vor dem Eintreiben einer Schraube (23) derart vorgebohrt wird, dass der Gewindeabschnitt (29) im hinteren Teil des Schraubenschafts als Sicherungsmittel zur Verankerung der Schraube (23) in der Konterlattung (21) wirkt.

5. Verfahren nach Anspruch 4, dadurch gekennzeichnet, dass eine Schraube (23) benützt wird, deren Gewindeabschnitt (29) im hinteren Teil des Schraubenschafts eine kleinere Steigung aufweist als der Gewindeabschnitt (31) im vorderen Teil des Schraubenschafts, so dass durch das Eintreiben der Schraube (23) die Isolierschicht (17) leicht komprimiert wird und dadurch eine Zugspannung auf die Schraube (23) ausübt.

6. Unterdach hergestellt nach dem Verfahren gemäss einem der Ansprüche 1 bis 5, mit einer zwischen Sparren (11) und Konterlattung (21) angeordneten Isolierschicht (17), wobei die Konterlattung (21) mittels Schrauben (23) mit den Sparren (11) verbunden ist, welche auch im hinteren Teil des Schraubenschafts einen Gewindeabschnitt (29) aufweisen, welcher als Sicherungsmittel wirkt, die verhindern, dass die Konterlattung (21) am Schraubenschaft hinuntergleitet.

7. Unterdach nach Anspruch 6, dadurch gekennzeichnet, dass die Schrauben (23) den Sparren (11) entlang in einer praktisch senkrechten Ebene abwechselnd in einem ersten, bzw. einem zweiten Winkel zum Sparren (11) angeordnet sind.

8. Unterdach nach Anspruch 7, dadurch gekennzeichnet, dass die einen Schrauben (23) lotrecht und die anderen Schrauben (23) etwa in einem Winkel von neunzig Grad zum Sparren (11) angeordnet sind.

9. Unterdach nach Anspruch 8, dadurch gekennzeichnet, dass der Unterschied zwischen beiden Winkeln etwa dreissig bis neunzig Grad beträgt.

10. Unterdach nach einem der Ansprüche 6 bis 9, dadurch gekennzeichnet, dass der Gewindeabschnitt (29) im hinteren Teil des Schraubenschafts eine kleinere Steigung aufweist als der Gewindeabschnitt (31) im vorderen Teil des Schraubenschafts und so eine leichte Kompression der Isolierschicht (17) bewirkt, so dass die Schraube (23) auf Zug beansprucht wird.

11. Verwendung einer Schraube mit einem Gewindeabschnitt (29,31) im hinteren und im vorderen Teil des Schraubenschafts, wobei der Gewindeabschnitt (29) im hinteren Teil des Schraubenschafts einen grösseren Durchmesser aufweist als der Durchmesser des Gewindeabschnitts im vorderen Teil des Schraubenschafts und der vordere Teil der Schraube als Bohrer (30) ausgebildet ist, zur Herstellung eines Unterdachs gemäss einem der Ansprüche 6 bis 10.

12. Verwendung einer Schraube nach Anspruch 11, dadurch gekennzeichnet, dass der Gewindeabschnitt (29) im hinteren Teil des Schraubenschafts 9 mm Durchmesser und der Gewindeabschnitt (31) im vorderen Teil des Schraubenschafts 7 mm Durchmesser aufweist.

13. Verwendung einer Schraube nach Anspruch 11 oder 12, dadurch gekennzeichnet, dass der Gewindeabschnitt (29) im hinteren Teil des Schraubenschafts eine kleinere Steigung aufweist, z.B. 2.5 mm, als die Steigung des Gewindeabschnitts (31) im vorderen Teil, wo die Steigung etwa 3.5 mm beträgt.

## Claims

1. A method of making an underroof having an insulating layer (17) disposed between rafters (11) and counter battening (21), the counter battening (21) being connected to the rafters (11) by bearers, characterised in that the bearers used are screws (23) which have a screwthreaded portion (29) at the rear part of the screw shank as well, to act as securing means after the screw has been driven in, to prevent the counter battening (21) from sliding down the screw shank, and in that in order to connect the counter battening (21) to the rafters (11) the screws (23) are disposed along the associated rafter in a practically vertical plane at a first and at a second angle respectively to the rafter.

2. A method according to claim 1, characterised in that one set of screws (23) is disposed vertically and the other set of screws (23) is disposed approximately at an angle of 90° to the rafter (11).

3. A method according to claim 1 or 2, characterised in that the difference between the two angles is about 30 to 90°.

4. A method according to any one of claims 1 to 3, characterised in that the counter battening (21) is so pre-drilled before a screw (23) is driven in that the screwthreaded portion (29) at the rear part of the screw shank acts as a securing means to anchor the screw (23) in the counter battening (21).

5. A method according to claim 4, characterised in that a screw (23) is used whose screwthreaded portion (29) at the rear part of the screw shank has a smaller pitch than the screwthreaded portion (31) at the front part of the screw shank, so that the driving-in of the screw (23) causes the insulating layer (17) to be slightly compressed so that a tensile stress is exerted on the screw (23).

6. An underroof made by the method according to any one of claims 1 to 5, with an insulating layer (17) disposed between rafters (11) and counter battening (21), the counter battening (21) being connected to the rafters (11) by screws (23) which have a screwthreaded portion (29) in the rear part of the screw shank as well to act as securing means to prevent the counter battening (21) from sliding down the screw shank.

7. An underroof according to claim 6, characterised in that the screws (23) are disposed along the rafter (11) in a practically vertical plane alternately at a first and at a second angle respectively to the rafter (11).

8. An underroof according to claim 7, characterised in that one set of screws (23) is disposed vertically and the other set of screws (23) approximately at an angle of 90° to the rafter (11).

9. An underroof according to claim 8, characterised in that the difference between the two angles is approximately 30 to 90°.

10. An underroof according to any one of claims 6 to 9, characterised in that the screwthreaded portion (29) at the rear part of the screw shank has a smaller pitch than the screwthreaded portion (31) at the front part of the screw shank and thus produces a slight compression of the insulating layer (17) so that the screw (23) is subjected to tension.

11. Use of a screw, comprising a screwthreaded portion (29,31) at the rear and at the front part of the screw shank, the screwthreaded portion (29) at the rear part of the screw shank having a larger diameter than the diameter of the screwthreaded portion at the front part of the screw shank and the front part of the screw being constructed as a drill bit (30), for making an underroof according to anyone of the claims 6 to 10.

12. Use of the screw according to claim 11, characterised in that the screwthreaded portion (29) at the rear part of the screw shank has a diameter of 9 mm and the screwthreaded portion (31) at the front part of the screw shank (7) has a diameter of 7 mm.

13. Use of the screw according to claim 11 or 12, characterised in that the screwthreaded portion (29) at the rear part of the screw shank has a smaller pitch, e.g. 2.5 mm, than the pitch of the screwthreaded portion (31) at the front part, where the pitch is about 3.5 mm.

## Revendications

1. Procédé de construction d'une sous-toiture comportant une couche isolante (17) disposée entre les chevrons (11) et le contre-lattis (21), le contre-lattis (21) étant raccordé aux chevrons (11) par des éléments porteurs, caractérisé en ce qu'on utilise, comme éléments porteurs, des vis (23) qui présentent également, dans la partie arrière de la tige de vis, un segment fileté (29) destiné à servir, après que la vis a été enfoncée, de moyen de sécurité qui s'oppose à ce que le contre-lattis (21) glisse vers le bas le long de la tige de vis, et en ce que, pour le raccordement du contre-lattis (21) aux chevrons (il), les vis (23) sont disposées le long de chaque chevron, dans un plan pratiquement vertical, de manière à former respectivement un premier et un second angle avec le chevron.

2. Procédé selon la revendication 1, caractérisé en ce que les vis (23) sont disposées les unes verticalement et les autres de manière à former un angle d'environ 90° avec les chevrons (11).

3. Procédé selon la revendication 1 ou 2, caractérisé en ce que la différence entre les deux angles est d'environ 30 à 90°.

4. Procédé selon l'une quelconque des revendications 1 à 8, caractérisé en ce qu'avant qu'une vis (23) ne soit enfoncée, il est formé, dans le contre-lattis (21), un pré-trou tel que le segment fileté (29) à la partie arrière de la tige de vis serve de moyen de sécurité pour l'ancrage de la vis (23) dans le contre-lattis (21).

5. Procédé selon la revendication 4, caractérisé en ce qu'on utilise une vis (23) dont le segment fileté (29) à la partie arrière de la tige de vis présente un pas plus faible que le segment fileté (31) à la partie avant de la tige de vis, de telle manière que la couche isolante (17) soit légèrement comprimée par l'enfoncement de la vis (23) et, de la sorte, exerce un effort de traction sur la vis (23).

6. Sous-toiture construite par le procédé selon l'une quelconque des revendications 1 à 5 et comportant une couche isolante (17) disposée entre les chevrons (11) et le contre-lattis (21), le contre-lattis (21) étant raccordé aux chevrons (11) au moyen de vis (23) qui présentent également, dans la partie arrière de la tige de vis, un segment fileté (29) qui sert de moyen de sécurité s'opposant à ce que le contre-lattis (21) glisse vers le bas le long de la tige de vis.

7. Sous-toiture selon la revendication 6, caractérisée en ce que les vis (32) sont disposées le long des chevrons (11), dans un plan pratiquement vertical, de manière à former alternativement un premier et un second angle avec le chevron (11).

8. Sous-toiture selon la revendication 7, caractérisée en ce que les vis (23) sont disposées les unes verticalement et les autres de manière à former un angle d'environ 90° avec le chevron (11).

9. Sous-toiture selon la revendication 8, caractérisée en ce que la différence entre les deux angles est d'environ 30 à 90°.

10. Sous-toiture selon l'une quelconque des revendications à à 9, caractérisée en ce que le segment fileté (29) à la partie arrière de la tige de vis présente un pas plus faible que le segment fileté (31) à la partie avant de la tige de vis et produit ainsi une légère compression de la couche isolante (17), ce qui fait que la vis (23) est sollicitée à la traction.

11. Utilisation d'une vis comportant des segments filetés (29, 31) à la partie arrière et à la partie avant de la tige de vis, le segment fileté (29) à la partie arrière de la tige de vis présentant un plus grand diamètre que le diamètre du segment fileté à la partie avant de la tige de vis et la partie avant de la vis étant réalisée sous forme de foret (30), pour la construction d'une sous-toiture selon l'une quelconque des revendication 6 à 10.

12. Utilisation d'une vis selon la revendication 11, caractérisée en ce que le segment fileté (29) à la partie arrière de la tige de vis présente un diamètre de 9 mm et le segment fileté (31) à la partie avant de la tige des vis présente un diamètre de 7mm.

13. Utilisation d'une vis selon la revendication 11 ou 12, caractérisée en ce que le segment fileté (29) à la partie arrière de la tige de vis présente un plus faible pas, par exemple de 2,5 mm, que le pas du segment fileté (31) à la partie avant, où le pas est par exemple de 3,5 mm.
